**Europäisches Patentamt**

**European Patent Office**

**Office européen des brevets**

(19)

(11) Numéro de publication : **0 341 125 B1**

(12)

# FASCICULE DE BREVET EUROPEEN

(45) Date de publication du fascicule du brevet :
**16.09.92 Bulletin 92/38**

(51) Int. Cl.⁵ : **A01K 1/015**

(21) Numéro de dépôt : **89401151.9**

(22) Date de dépôt : **21.04.89**

(54) **Litière pour chats et petits animaux, faite de grains de matériau peu dense, caverneux et non absorbant, éliminant l'eau des urines par évaporation naturelle et empêchant le développement des mauvaises odeurs par l'adjonction de bactéricides.**

(30) Priorité : **02.05.88 FR 8806246**

(43) Date de publication de la demande :
**08.11.89 Bulletin 89/45**

(45) Mention de la délivrance du brevet :
**16.09.92 Bulletin 92/38**

(84) Etats contractants désignés :
**AT BE CH DE ES GB GR IT LI LU NL SE**

(56) Documents cités :
**EP-A- 0 073 902**
**WO-A-88/00434**
**GB-A- 1 533 261**

(73) Titulaire : **Chelle, René**
**SETRIC S.A. Chemin des Monges B.P. 9**
**F-31450 Deyme (FR)**

(72) Inventeur : **Chelle, René**
**SETRIC S.A. Chemin des Monges B.P. 9**
**F-31450 Deyme (FR)**

# Description

La présence d'animaux de compagnie, crée pour l'homme des contraintes dont le plus grand nombre est lié aux problèmes posés par l'émission quotidienne d'urines et de fèces.

L'intérêt grandissant de l'homme pour de tels animaux a conduit les industriels à proposer différents produits dits de litière, à disposer dans un bac où l'animal prend l'habitude de se rendre pour uriner ou déféquer.

Les premières litières ont été très certainement constiutées par de la terre, du sable, ou de la sciure. On s'est très rapidement rendu compte que ces matériaux ne résolvaient pas l'essentiel des problèmes posés pour lesquels la solution était de faire disparaitre le liquide (urine) et les mauvaises odeurs résultant de l'action des microorganismes sur les matières organiques (surtout urée) présentes dans l'urine. Les premiers matériaux utilisés ne répondaient pas à cette attente. De plus, on leur reproche d'être trop lourds (sable - terre) et d'être salissants (sable - terre -sciure) par le fait qu'ils adhérent facilement à la plante des pieds et aux doigts des chats qui les entrainent hors du bac.

L'attention s'est par la suite portée sur des matériaux réellement absorbants et c'est ainsi qu'ont été lancés sur le marché des litières, deux matériaux qui l'ont presque totalement conquis : la Sépiolite et l'Attapulgite. Ce sont deux argiles de type fibreux, donc absorbantes et à résistance mécanique élevée, susceptibles d'absorber leur propre poids en eau et de ne pas s'effriter lorsqu'elles sont gorgées de liquide. D'autres matériaux ont été recherchés pour leur qualité absorbante et leur résistance mécanique, certains obtenus par synthèse (matières plastiques poreuses), d'autres résultant de préparations de matières premières d'origine végétale (débris cellulosiques vététaux...) ou d'origine industrielle (papiers - cartons). Ils n'ont pas détrôné la Sépiolite et l'Attapulgite car ils n'ont pas le pouvoir absorbant de ces deux argiles et leur nature souvent biologique offre aux bactéries des constituants fermentescibles, propres à la multiplication des microorganismes.

La Sépiolite et l'Attalpugite ont-elles, pour autant, résolu tous les problèmes posés ? Elles retiennent, certes, l'eau de l'urine -et c'est là leur qualité principale- mais aussi, les bactéries et les matières fermentescibles sur lesquelles peuvent se multiplier ces bactéries. Est-il besoin de rappeler que cette fixation naturelle des bactéries n'est pas sans rappeler une des techniques largement utilisées en biotechnologie et qui vise à fixer les bactéries ou les enzymes sur des matières minérales absorbantes. De fait, les odeurs nauséabondes de fermentation se dégagent de ces litières minérales absorbantes. Cela a d'ailleurs conduit à l'apparition sur le marché, de produits à ajouter aux litières pour masquer les mauvaises odeurs par des parfums ou pour inhiber le développement des bactéries responsables de ces odeurs.

Les tentatives pour parfumer les litières faites d'argiles absorbantes se sont révélées onéreuses car il est nécessaire d'introduire de grandes quantités de parfums pour qu'une partie suffisante de ces parfums parvienne à se dégager d'une matière absorbante utilisée par définition pour retenir et non pour dégager.

Nous pouvons résumer ce qui vient d'être dit jusqu'ici, en avançant que toutes les litières commercialisées fonctionnent sur le même principe : celui de l'absorption de l'eau des urines par des matériaux particulièrement aptes à absorber.

Mais l'élimination de l'eau des urines peut se faire par un mécanisme différent de l'absorption, en particulier par des mécanismes d'évaporation naturelle rapide.

Nous proposons donc pour invention d'utiliser, pour la confection de litière pour chats et petits animaux, l'association

. d'un matériau caverneux, de grande surface spécifique et non absorbant, de faible densité et de granulation adéquate, qui permet une forte évaporation naturelle,

. d'un parfum qui masque l'inévitable dégagement des odeurs "sui generis" de l'urine perçues dès l'émission de celle-ci,

. et d'un bactéricide qui inhibe les interventions bactériennes et empêche, de ce fait, la formation de molécules malodorantes (comme l'ammoniac) qui suivent, quand elles sont produites, le cheminement de l'eau qui s'évapore.

Les matériaux jusqu'ici utilisés ne remplissent pas ces trois conditions.

Le sable, par exemple, ne remplit que deux de ces conditions : il a une grande surface spécifique et il n'est pas absorbant, mais il est dense.

Les argiles fibreuses, de type sépiolite ou attapulgite, largement utilisées, n'en remplissent également que deux : elles ont une grande surface spécifique et elles sont peu denses, mais elles sont absorbantes. Leur grande surface spécifique et leur faible densité, s'expliquent par la "tunnellisation" de ces matériaux. Le diamètre des tunnels est tel qu'il se développe des forces capillaires qui font pénétrer les liquides (notamment l'eau des urines) dans ces matériaux et confèrent à ceux-ci une importante capacité à absorber. L'eau qui envahit les tunnels n'offre d'interface avec l'air que sur les extrémités des tunnels. Il s'ensuit que ces argiles, malgré leur grande surface spécifique, n'ont pas une pleine capacité à évaporer ; elles retiennent l'eau et c'est pour cela qu'elles sont utilisées.

Les matériaux caverneux remplissent les trois conditions requises. Les cavités de ces matériaux n'ont pas comme les matériaux tunnellisés, une entrée et une sortie différente, mais ne possèdent, de façon générale, qu'une seule ouverture. Leurs diamètres sont nettement plus grands que ceux des tunnels des argiles. Pour ces deux raisons, leur capacité à absorber est faible, mais leur surface spécifique est grande. Ce sont des matériaux qui offrent une grande surface extérieure de répartition du liquide, donc une grande surface de contact avec l'air et qui permettent, de ce fait, une évaporation rapide car celle-ci n'est pas ralentie par les forces de rétention de l'eau adsorbée. La présence de cavernes confère à de tels matériaux, une faible densité.

Il sera donné, plus loin, et sur un exemple, des valeurs qui font ressortir que les matériaux caverneux, peu denses, à grande surface spécifique et non absorbants, facilitent l'évaporation de l'eau.

Dans le EP-A-0073902, qui comporte tous les éléments techniques du préambules de la revendication 1, il est proposé une litière non-absorbante et hydrophobe. Par cette dernière caractéristique, l'étalement de l'eau est interdit, ce qui défavorise son évaporation et facilite sa descente par gravité dans les parties inférieures de la litière.

Dans le produit que nous présentons pour invention et qui se caractérise par les éléments de la partie caractérisante de la revendication 1, le matériau décrit ci-dessus, est associé à un parfum et à un bactéricide. Il est évident que l'évaporation accélérée de l'eau est accompagnée du départ des molécules volatiles malodorantes. Ces molécules sont pondéralement peu importantes : elles confèrent cependant à l'urine, son odeur "sui généris". Il suffit d'associer, comme nous le proposons, au matériau, un parfum pour masquer ces odeurs initiales qui, de fait, ne seront pas gênantes. On peut noter à cet égard que la quantité de parfum à ajouter est beaucoup moins élevée que celle qu'il faut introduire dans un matériau absorbant qui, par définition, est utilisé pour retenir et non pour dégager.

Les mauvaises odeurs les plus gênantes sont celles qui se forment à partir de l'urée de l'urine sous l'action des bactéries.

Nous proposons donc pour invention, un matériau caverneux, peu dense, de grande surface spécifique et non absorbant, traité avec un bactéricide pour détruire les bactéries ou, tout au moins, inhiber leur action et donc pour interdire la formation de mauvaises odeurs. Après ce traitement, l'évaporation de l'eau de l'urine peut se faire sans risque d'entrainer les molécules malodorantes. De plus, l'évaporation que favorise la configuration extérieure des grains permet de séparer l'eau, des substances non volatiles, comme l'urée, qui restent au contact du matériau. Il s'ensuit, au fur et à mesure de l'évaporation de l'eau, une concentration de l'urée et des autres constituants non volatils (sels) telle qu'indépendamment de la présence du bactéricide, il se produit, en plus, une inhibition des bactéries qui ne peuvent plus se développer dans un milieu trop concentré.

Les matériaux caverneux que l'on pourra utiliser pour litière peuvent être d'origines très variées. Ils peuvent avoir une origine naturelle, qu'ils soient minéraux ou biologiques ; ils peuvent être aussi des matériaux synthétiques comme les matières plastiques.

Nous prenons, ici, pour exemple : la Pouzzolane qu'on traitera avec un bactéricide et un parfum. Nous rappelons que la Pouzzolane est une roche d'origine volcanique résultant de la solidification de laves particulièrement chargées en gaz. Le départ des gaz est responsable de la formation de petites cavernes sans qu'il y ait de réelles et de fréquentes communications entre ces cavernes. La Pouzzolane est disponible en grande quantité en Europe, notamment en France (Massif Central). Son prix d'élaboration est beaucoup moins élevé que celui des argiles absorbantes fibreuses importées (Sépiolite - Attapulgite) car elle nécessite moins d'opérations de préparation. Seul un calibrage est nécessaire pour avoir la granulation la mieux adaptée aux litières (de l'ordre de 2 mm à 6 mm),
ni trop petite pour ne pas être entrainée par le chat hors de la litière, ni trop grande pour ne pas blesser la surface plantaire des animaux.

Avant de proposer pour l'invention, la Pouzzolane, comme exemple de matériau non absorbant de litière pour chats et petits animaux, nous avons établi une comparaison avec la Sépiolite, matériau absorbant, leader sur le marché. Cette comparaison a concerné les principaux paramètres à prendre en considération pour l'usage indiqué ci-dessus.

Du point de vue mécanique, la Sépiolite n'a pas initialement, une résistance mécanique suffisante. Il est nécessaire de la soumettre à un traitement thermique de plusieurs centaines de degrés centigrades pour que ses qualités mécaniques soient acceptables surtout quand elle a absorbé de l'eau. La Pouzzolane, par contre, possède une résistance mécanique originelle très élevée qui l'a faite utiliser, depuis l'Antiquité, par les Romains, pour la réalisation de ciments.

Du point de vue densité, la sépiolite et la pouzzolane présentent des avantages semblables, car elles sont, toutes les deux, des matériaux légers.

Du point de vue capacité à absorber l'eau, la Sépiolite, tout au moins, celle de bonne qualité, peut absorber approximativement son propre poids d'eau. La Pouzzolane ne retient l'eau que dans la proportion de 10 % de son poids et cette eau n'est pas absorbée, mais simplement retenue par simple adsorption sous forme d'un film de faible épaisseur à la surface du grain.

Du point de vue capacité à laisser s'évaporer l'eau, la Pouzzolane présente, évidemment un incontestable avantage sur la Sépiolite. C'est ce qui est confirmé par les essais suivants. Une même quantité d'eau (10 ml) est versée en surface, d'une part sur la Pouzzolane, d'autre part sur la Sépiolite. Les échantillons sont de même volume (100 ml de granulés) et placés dans des boîtes de Pétri semblables pour avoir la même surface apparente et la même profondeur. Après avoir reçu l'eau, ils sont placés dans les mêmes conditions de température et d'humidité (atmosphère du laboratoire à 20°C environ). Au bout de 24 heures, les échantillons sont pesés pour déterminer la perte d'eau par évaporation. Les valeurs trouvées font apparaître que la Pouzzolane perd 76 % de l'eau initialement introduite contre 51 % pour la Sépiolite. Exprimé autrement, on peut dire que l'eau résiduelle est deux fois plus importante dans la Sépiolite que dans la Pouzzolane. A partir de ces données, il est facile d'évaluer que les deux à quatre litres de litière habituellement introduits dans un bac sont largement suffisants pour évaporer en 24 heures l'eau des urines (environ 50 ml par chat) quotidiennes émises par plusieurs chats.

Les effets de l'adjonction de bactéricide à la Pouzzolane avant sa livraison dans le commerce, ont été expérimentalement déterminés. Comme il a été dit plus haut, l'urine est une solution aqueuse dont le principal constituant est l'urée qui se décompose facilement en ammoniac sous l'action des uréases bactériennes. Au bout de quelques heures après le début de son utilisation, la litière, quelle qu'en soit sa nature, est bactériologiquement souillée par les premières déjections des chats. Dès lors, le dégagement de l'ammoniac, gaz volatil et malodorant pose problème. Il est évident que, dans ces conditions, la forte évaporation de l'urine, accentue aussi le dégagement des molécules volatiles comme l'ammoniac.

Pour éviter cela, nous proposons de traiter le matériau peu dense, caverneux et non absorbant de la litière, en prenant l'exemple de la Pouzzolane, avec un bactéricide pour que celui-ci détruise ou inhibe les bactéries responsables par leurs uréases de la formation d'ammoniac.

Des essais ont été effectués avec différents bactéricides, donnant des résultants concordants. Celui qui a été le plus souvent utilisé est le Glyoxal (préparation à 40 %) utilisé à différentes concentrations, notamment à la concentration de 1 %. Le traitement peut-être fait de différentes façons et notamment en pulvérisations.

Des bacs à litière ont été garnis de Pouzzolane traitée au bactéricide. Une suspension de bactéries (10$^a$) a été répartie en surface du bac. Pour similer une émission urinaire de chat, 40 ml d'une solution d'urée à 30 g par litre ont été déversés sur la litière. Ces bacs ont été ensuite laissés 48 heures à la température du laboratoire, en même temps que des bacs contenant de la Pouzzolane non traitée mais ayant aussi reçu la suspension bactérienne et la solution d'urée.

Pour demeurer dans les conditions de perception des propriétaires de chat, nous avons demandé à plusieurs personnes, dans l'ignorance de l'expérience, si elles percevaient l'odeur caractéristique de l'ammoniac. Les avis donnés ont été convergents : les litières traitées au bactéricide ne dégageaient pas d'odeur d'ammoniac alors que celle-ci était très forte dans les litières non traitées.

De l'enquête que nous avons faite, il ressort que les essais de litière, avec bactéricide, réalisés par ailleurs, ne se sont pas adressés à des matériaux peu denses, caverneux et non absorbants, mais pour la plupart à des matériaux non caverneux et absorbants. La quantité de bactéricide à ces matériaux, pour être efficace, doit être élevée du fait de leur capacité à absorber. La pouzzolane, parce qu'elle n'est pas absorbante, offre donc l'avantage d'être efficacement antibactérienne avec un minimum de bactéricide, tout comme elle peut être efficacement parfumée avec une très faible quantité de molécules odorantes.

Compte tenu de ce qui est donné dans ce descriptif, nous présentons pour invention, l'utilisation pour litières (chats et petits animaux) d'un matériau peu dense, caverneux et non absorbant, par exemple la Pouzzolane, traitée avec un bactéricide, par exemple le Glyoxal. Un tel matériau peut-être également parfumé par l'adjonction de molécules odorantes.

**Revendications**

1 - Litière pour chats et petits animaux, masquant l'odeur initiale des urines par un parfum et interdisant la formation de nouvelles odeurs par la présence de bactéricide fixé en surface constituée de grains peu dense, non absorbant caractérisé par le fait que ces grains sont de matériau caverneux et de grande surface spécifique, ce qui conduit l'urine à s'étaler fortement sur les grains favorisant une évaporation rapide de son eau.

2 - Litière pour chats et petits animaux, selon Revendication 1, caractérisée par le fait qu'elle peut être constituée d'une matière minérale naturelle comme la Pouzzolane.

3 - Litière pour chats et petits animaux, selon Revendications 1 et 2, caractérisée par le fait que le bactéricide utilisé, n'est pas absorbé mais adsorbé par le matériau ce qui permet d'empêcher la formation de mauvaises odeurs bactériennes même avec de plus faibles quantités.

4 - Litière pour chats et petits animaux, selon Revendications 1, 2 et 3, caractérisée par le fait que le parfum utilisé est seulement adsorbé et qu'il est donc efficace, à très faible dose, car il est volatilisé en même temps que l'eau des urines.

**Patentansprüche**

1. Streu für Katzen und kleinen Tieren, die den Uringestank durch einen Riechstoff maskiert, und die gestaltung neuerer Gestanke durch oberflächliche bakterien vermeidet. Diese Streu besteht aus Körnschen swacher Dichte, die eine grosse spezifische Fläche haben aber oberflächlich nicht einzaugend sind, so dass das Urin sich weit über die Körnschen ausbreiten kann, und das Urinwasser schnell ausdünsten kann.

2. Streu für Katzen und kleinen Tieren, der Forderung 1 entsprechend, das kenntlich ist an dem es aus einem Mineral Werkstoff, zum beispiel Pouzzolane, besteht.

3. Streu für Katzen und kleinen Tieren, der Förderungen 1 und 2 entsprechend, das kenntlich ist am dem : der keimtötende Stoff wird nicht von dem Werkstoff eingezaugt zondern oberflächlich aufgezaugt. Dieses vermeidet die Gestaltung Bakterien Gestank sogar mit minderen Quantitäten.

4. Streu für Katzen und kleinen Tieren, der Förderungen 1, 2, 3 entsprechend, kenntlich an dem : der Riechstoff ist nur oberflächlich eingezaugt, deshalb ist er auch in sehr kleinem Menge wirksam, weil er gleichzeitig mit dem Urinwasser verdünst wird.

**Claims**

1. Litter for cats and small domestic animals able to mask the original odor of the urine by using an adequate perfume and to avoid new odors by using a bactericide fixed on the surface of the material wich constitute the litter. The material of the litter consists in a small grain of low density, not necessarily adsorptive to make easier the urine spread effect and so, the evaporation of the aqueous constituant of the urine.

2. Litter for cats and small domestic animals, as in Contend 1, caracterized by the fact that the material can be a natural mineral material as the Pouzzolane.

3. Litter for cats and small domestic animals, as in Contend 1 and 2, caracterized by the fact that the bactericide used is not adsorbed but simply adsorbed to avoid the bacterian bad odor formation even if used in small quantities.

4. Litter for cats and small domestic animals, as in Contend 1, 2, 3, caracterized by the fact that the perfume used is simply adsorbed which give a good efficiency even when used in small quantities because of the concomittant desorption of water.